# EUROPEAN PATENT SPECIFICATION

(11) **EP 0 349 311 B1**
(45) Date of publication and mention of the grant of the patent: **12.03.1997**
(21) Application number: 89306596.1
(22) Date of filing: 29.06.1989
(51) Int. Cl.: D21H 21/02, D21H 17/69

(54) **Pitch control**
Pechkontrolle
Contrôle de la poix

(30) Priority: 29.06.1988 GB 8815515
(43) Date of publication of application: 03.01.1990
(73) Proprietor: ECC INTERNATIONAL LIMITED, Theale Reading Berkshire RG7 4SA (GB)
(72) Inventor: Rogan, Keith Robert, Bugle St. Austell, PL26 8PW (GB); Adams, John Michael, Ruan Highlanes Truro TR2 5NR (GB)
(74) Representative: Bull, Michael Alan

(56) References cited:
- EP-A- 0 058 622
- EP-A- 0 245 553
- WO-A-89/06294
- FR-A- 874 759
- GB-A- 1 228 538
- US-A- 3 801 433
- ABSTRACT BULLETIN OF THE INSTITUTE OF PAPER CHEMISTRY. vol. 51, no. 3,September 1980, APPLETON US page 355 F.ENDO: "PITCH TROUBLE INHIBITOR."

## Description

This invention relates to coated inorganic particulate material suitable for incorporation in cellulose pulp compositions to reduce the adverse effects of the deposition of pitch contained therein in the manufacture of paper or board, and to a process for manufacturing paper or board.

Pitch is the name given by paper manufacturers to the substance derived from wood resins which accumulates on the wire mesh belts, or "wires", of paper making machines and on the rolls and dewatering felts. The pitch deposits are sticky and can block holes in the wire and reduce the absorptive capacity of the felt. They can pick fibres from the formed paper web, often causing holes or weak areas, and occasionally appear in the paper wet as brown lumps.

Pitch may be extracted from wood and mechanical or chemical paper pulps by means of organic solvents. The pitch consists predominantly of fatty acids, fatty esters, resin acids and unsaponifiable material such as sterols, waxes and higher alcohols. Both hardwoods and softwoods contain fatty acids, fatty acid esters and unsaponifiable materials, but only softwoods contain significant amounts of resin acids. This latter material occurs in wood mainly in the ray cells and resin canals or ducts. Softwoods or gymnosperms such as pine or spruce therefore in general cause more serious pitch problems than hardwoods such as birch, maple, oak and poplar. The softwood species Pinus Strobus L. is particularly rich in resin. The process by which the paper pulp is prepared is also important. The wood may be reduced to pulp by mechanical grinding alone or with the aid of a chemical cooking process. The two most important chemical processes are the sulphite process in which ground wood is cooked in an acid solution of calcium bisulphite saturated with sulphur dioxide, and the sulphate or Kraft process in which the cooking is performed in an alkali solution comprising caustic soda, sodium sulphide and sodium hydrosulphide. When pulp is prepared by the sulphate process the pitch problem is less severe than when the pulp is prepared by the mechanical or sulphite processes because in the sulphate process the cooking solution is alkaline and most of the pitch-forming material is removed by saponification.

Two methods are commonly used for controlling pitch in paper making. In the first method an absorbent material is introduced which will adsorb the pitch in the form of small particles, generally smaller than about 2 micrometers in diameter. Adsorbent materials commonly used for this purpose include talc and diatomaceous silica. In the second method the pitch is chemically dispersed so that it remains in suspension in process water and is removed with the waste water from the paper making process.

Our GB-A- 1375161 describes the use, as a pitch control agent in paper making, of a clay pigment which has been coated with an organic material which adheres strongly to the clay pigment and which renders the surface of the particles of the clay pigment oleophilic. Inter alia, the organic material may be an alkyl pyridinium salt or a quaternary ammonium salt and the dose rate of the organic material on the dry clay pigment is preferably in the range of from 0.5% to 5% by weight.

GB-A- 1228538 relates to kaolinites modified with inorganic gels to improve their dispersibility in organic systems.

EP-A-0245553 describes the treatment of clays with cationic polyelectrolytes to prepare high bulking pigments.

WO-A-89/06294 (citable under Article 54(3) EPC) describes a method of reducing pitch in pulping and papermaking in which there is added to a pitch-containing furnish a composite substance which is prepared by irreversibly adsorbing a water-soluble cationic polymer onto an essentially water-insoluble particulate substrate.

According to a first aspect of the present invention (for the designated states AT, BE, CH, DE, FR, IT, LU, NL, SE), there is provided the use, as an agent for controlling the deposition of pitch in a paper making process, of a coated inorganic particulate material which comprises a clay mineral coated with (a) a cationic polyelectrolyte which is a water-soluble substituted polyolefin containing quaternary ammonium groups, said cationic polyelectrolyte being present in an amount of from 0.01 to 1.5% by weight based on the weight of the dry clay mineral or with (b) an inorganic gel which adheres to the clay and which renders the surface of the particles of clay hydrophobic.

According to a first aspect of the present invention (for the designated states ES, GR), there is provided the use, as an agent for controlling the deposition of pitch in a paper making process, of a coated inorganic particulate material which comprises a clay mineral coated with (a) a cationic polyelectrolyte which is a water-soluble substituted polyolefin containing quaternary ammonium groups, or with (b) an inorganic gel which adheres to the clay and which renders the surface of the particles of clay hydrophobic. The cationic polyelectrolyte is preferably present in an amount of from 0.01 to 1.5% by weight based on the weight of the dry clay mineral.

According to another aspect of the present invention, there is provided a process for controlling the deposition of pitch in a paper-making process, wherein there is incorporated into the paper-making composition a coated inorganic particulate material which comprises a clay mineral coated with an inorganic gel which adheres to the clay and which renders the surface of the particles of clay hydrophobic.

A cationic polyelectrolyte is believed to render the surface of the clay mineral hydrophilic.

The clay is coated with one or other, but not both, of the cationic polyelectrolyte and inorganic material which adheres to the clay and which renders the surface of the particles of the clay hydrophobic.

The clay mineral may be of the kandite group, for example kaolinite, nacrite, dickite or halloysite and may be in its natural hydrous state or may be calcined or heat treated at a temperature and for a time sufficient to drive off some or all of its chemically bound water. Alternatively the clay mineral may be of the smectite group, for example bentonite, montmorillonite, saponite, hectorite, beidellite or fuller's earth.

Preferably the clay mineral has a particle size distribution such that the mean particle diameter is not greater than 1 micrometre and the specific surface area is at least 12 m²g⁻¹.

The cationic polyelectrolyte may have quaternary ammonium groups either in the linear polymer chain or in branches of the polymer chain. The number average molecular weight of the cationic polyelectrolye is preferably in the range of from about 1500 to about 500,000.

It has been found that advantageous results are obtained when the cationic polyelectrolyte is a poly(diallyl di(hydrogen or lower alkyl)ammonium salt) having a number average molecular weight in the range of from about 10,000 to 100,000. The lower alkyl groups which may be the same or different have up to four carbon atoms and are preferably methyl. The ammonium salt may be, for example, a chloride, bromide, iodide, HSO₄⁻, CH₃SO₄⁻ or nitrite. Preferably the salt is a chloride. Most preferably the cationic polyelectrolyte is poly(diallyl dimethyl ammonium chloride).

Alternatively, the cationic polyelectrolyte may be the product of copolymerising epichlorohydrin and an aliphatic secondary amine, which product has the formula:- 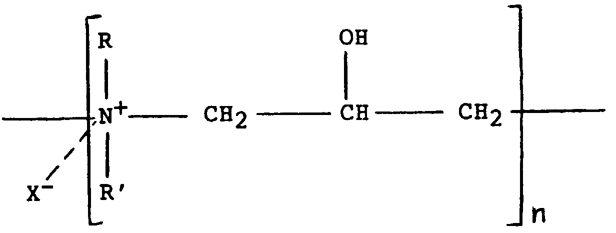 in which R and R', which may be the same or different, are each hydrogen or a lower alkyl group, preferably having from one to four carbon atoms, preferably methyl or ethyl and X is Cl⁻, Br⁻, I⁻, HSO₄⁻, CH₃SO₄⁻ or NO₂⁻.

The inorganic material which adheres to the clay and which renders the surface of the clay particles hydrophobic is an inorganic gel, such as a magnesium silicate gel which may be prepared by the method described in British Patent Specification No. 1228538, in which the clay mineral is suspended in water and there is added to the suspension an aqueous solution of sodium metasilicate. The resultant suspension is stirred and there is then added to the stirred suspension an aqueous solution of magnesium sulphate and the suspension is again stirred. The pH of the suspension is then reduced to within the range 6 to 8 with sulphuric acid and the suspension is filtered and the magnesium silicate coated clay washed twice with deionised water and thermally dried.

Other inorganic gels, however, such as aluminium silicate, aluminium hydroxide or silica may be employed but probably will not be as effective as magnesium silicate for pitch control purposes.

The clay mineral which has been coated by one of the methods described above is preferably added, in a substantially dry state, to the paper mill thin stock and the amount of the coated clay mineral added is in the range of from 0.5 to 25% by weight based on the weight of the bone dry wood fibres. The paper mill thin stock is an aqueous suspension of wood fibres which generally contains from about 0.5 to about 1.0% by weight of dry wood fibres.

The invention will now be illustrated by the following Example

### EXAMPLE

Two coated clay minerals were prepared by the following methods:-
1. A calcined kaolinite which had been prepared by heating a fine kaolin clay to a temperature of 1080°C for 30 minutes was mixed with sufficient water to form a suspension containing 45% by weight of dry calcined kaolinite and 1% by weight, based on the weight of dry calcined kaolinite of a poly (diallyl dimethyl ammonium chloride) having a number average molecular weight of about 30,000 and a cation charge density of 530 coulombs/g. The coated calcined kaolinite thus formed had a particle size distribution such that the mean particle diameter was 0.75 micrometers and the specific surface area was 14.1 m²g⁻¹. The suspension was spray dried to produce a product in the form of dry microspheres.
2. 500g of a fine hydrous kaolin clay was suspended in 1.5 litres of water and there was added to this suspension a solution containing 28.1g of sodium metasilicate in water. The suspension was stirred for 10 minutes and at the end of this period the pH of the suspension was found to be 11.8. A solution containing 24.9g of magnesium sulphate (MgSO₄.7H₂O) in water was then added and the suspension stirred for 15 minutes. At the end of this period the pH was found to be 9.7. The pH was reduced to 7.0 by adding a 10% solution of sulphuric acid. The suspension was then filtered and the magnesium silicate coated clay was washed twice with deionised water and dried for 16 hours at 90^{o}C.

There was used as a control a conventional pitch control agent which was a finely ground talc having a mean particle diameter of 1.65 micrometers and a specific surface area of 13.6m²g⁻¹.

There was used as a further comparison a pitch control agent in accordance with GB-A- 1375161 which was prepared by coating a hydrous kaolin clay having a particle size distribution such that 55% by weight consisted of particles having an equivalent spherical diameter smaller than 2 micrometers with 1% by weight, based on the weight of dry kaolin, of a primary amine of formula R.NH₂ where R represents a mixture of alkyl groups derived from hydrogenated tallow. The mean particle diameter was 1.62 micrometers and the specific surface area was 6.5 m²g⁻¹.

Each mineral material was mixed with water to form a suspension containing 1% by weight of the dry mineral material and to 100g portions of this suspension were added 10cm³ portions of colloidal solutions in ethanol of a wide range of different quantities of oleic acid, which is considered to be a realistic model for the type of pitch which is found in suspension in paper making stock. In each case the mixture was shaken for 7 1/2 minutes after which a 40 cm³ sample of the suspension was centrifuged and 20 cm³ of the supernatant liquid was pipetted into a vial. The water and ethanol were removed from the sample contained in the vial in a vacuum oven at 60-80^{o}C and a known volume of a solution containing 0.2 mol.dm⁻³ of NaClO₄.H₂O in methanol was added to the vial by pipette. When the oleic acid was fully dissolved three equal consecutive injections of the resultant solution were made into a high pressure liquid chromatography column which was maintained at a temperature of 40^{o}C, the back pressure being 16.2 MPa. For each of the three injections the area of the characteristic peak for oleic acid was measured and the mean of the three measurements calculated.

For each concentration of oleic acid in ethanol a control experiment was performed by mixing a 10 cm³ portion of the oleic acid solution with 99g of water. The resultant solution was treated in accordance with the procedure described above in connection with the samples containing the mineral material, with the exception of the centrifuging step, and the mean of three measurements of the characteristic peak for oleic acid was obtained.

From the two mean results the weight of oleic acid adsorbed by a given weight of the mineral material was calculated.

A graph was drawn for each mineral material of the weight of oleic acid adsorbed per gram of the mineral material against the concentration of oleic acid in each sample solution and it was found that the weight of oleic acid adsorbed by the mineral material increased with oleic acid concentration until a ceiling value was reached above which substantially no further increase was observed.

The following Table gives the ceiling values of the amount of oleic acid adsorbed for the three mineral materials. Also given is an approximate cost per tonne of each of the mineral materials and a value for the cost effectiveness of the mineral material in terms of the weight of oleic acid adsorbed per unit cost of the adsorbent material.

**Table**

| Mineral Material | Mean particle diameter (micrometers) | Specific surface area (m²g⁻¹) | Oleic acid adsorbed (mol.tonne⁻¹) | Cost of mineral material (£.tonne⁻¹) | Cost effectiveness (m.mol.£⁻¹) |
|---|---|---|---|---|---|
| Cationic calcined kaolin | 0.75 | 14.1 | 300.0 | 460 | 652 |
| MgSiO₃ treated kaolin | 0.43 | 25.2 | 64.5 | 100 | 645 |
| Finely ground talc (control) | 1.65 | 13.6 | 101.2 | 250 | 405 |
| Amine treated kaolin (comparative) | 1.62 | 6.5 | 26.2 | 90 | 291 |

## Claims (Claims for the following Contracting State(s): AT, BE, CH, DE, FR, IT, LI, LU, NL, SE)

1. The use, as an agent for controlling the deposition of pitch in a paper making process, of a coated inorganic particulate material which comprises a clay mineral coated with (a) a cationic polyelectrolyte which is a water-soluble substituted polyolefin containing quaternary ammonium groups, said cationic polyelectrolyte being present in an amount of from 0.01 to 1.5% by weight based on the weight of the dry clay mineral or with (b) an inorganic gel which adheres to the clay and which renders the surface of the particles of clay hydrophobic.

2. The use according to claim 1, wherein the cationic polyelectrolyte has quaternary ammonium groups in the linear polymer chain or in branches of the polymer chain.

3. The use according to claim 1 or 2, wherein the number average molecular weight of the cationic polyelectrolyte is in the range of from 1500 to 500,000.

4. The use according to any preceding claim, wherein the cationic polyelectrolyte is a poly(diallyl di(hydrogen or lower C₁₋₄ alkyl)ammonium salt) having a number average molecular weight in the range of from 10,000 to 100,000.

5. The use according to claim 4, wherein one or both of the alkyl groups is methyl.

6. The use according to any preceding claim, wherein the cationic polyelectrolyte is poly(dially dimethyl ammonium chloride).

7. The use according to any one of claims 1 to 3, wherein the cationic polyelectrolyte is the product of copolymerising epichlorohydrin and an aliphatic secondary amine, which product has the formula 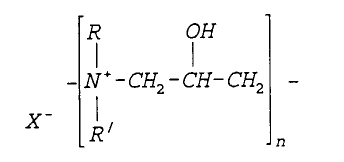 in which R and R', which may be the same or different, are each hydrogen or lower alkyl and X is Cl^{-,} Br^{-,} I^{-,} HSO₄^{-,} CH₃SO₄⁻ or NO₂⁻.

8. The use according to any preceding claim, wherein the clay mineral is of the Kandite group.

9. The use according to any one of claims 1 to 7, wherein the clay mineral is of the smectite group.

10. The use according to any preceding claim, wherein the clay mineral has a particle size distribution such that the mean particle diameter is not greater than 1 micrometer.

11. The use according to any preceding claim, wherein the clay mineral has a specific surface area of at least 12m².g⁻¹.

12. The use according to claim 1 or any one of claims 8 to 11, wherein the inorganic gel is a magnesium silicate gel.

13. A process for controlling the deposition of pitch in a paper-making process, wherein there is incorporated into the paper-making composition a coated inorganic particulate material which comprises a clay mineral coated with an inorganic gel which adheres to the clay and which renders the surface of the particles of clay hydrophobic.

14. A process according to claim 13, wherein the inorganic gel is a magnesium silicate gel.

15. A process according to claim 13 or 14, wherein the coated clay mineral is added to a paper mill thin stock in a substantially dry state to form the paper making composition.

16. A process according to claim 13, 14 or 15, wherein the amount of coated clay mineral added to the paper-making composition is in the range of from 0.5% to 25% by weight based on the dry weight of wood fibres in the paper mill thin stock.

17. A process according to any one of claims 13 to 16, wherein the clay mineral is of the Kandite group.

18. A process according to any one of claims 13 to 16, wherein the clay mineral is of the smectite group.

19. A process according to any one of claims 13 to 18, wherein the clay mineral has a particle size distribution such that the mean particle diameter is not greater than 1 micrometer.

20. A process according to any one of claims 13 to 19, wherein the clay mineral has a specific surface area of at least 12m².g⁻¹.

## Claims (Claims for the following Contracting State(s): ES, GR)

1. The use, as an agent for controlling the deposition of pitch in a paper making process, of a coated inorganic particulate material which comprises a clay mineral coated with (a) a cationic polyelectrolyte which is a water-soluble substituted polyolefin containing quaternary ammonium groups, or with (b) an inorganic gel which adheres to the clay and which renders the surface of the particles of clay hydrophobic.

2. The use according to claim 1, wherein the cationic polyelectrolyte has quaternary ammonium groups in the linear polymer chain or in branches of the polymer chain.

3. The use according to claim 1 or 2, wherein the cationic polyelectrolyte is used in an amount of from 0.01 to 1.5% by weight based on the weight of the dry clay mineral

4. The use according to claim 1, 2 or 3, wherein the number average molecular weight of the cationic polyelectrolyte is in the range of from 1500 to 500,000.

5. The use according to any preceding claim, wherein the cationic polyelectrolyte is a poly(diallyl di(hydrogen or lower C₁₋₄ alkyl)ammonium salt) having a number average molecular weight in the range of from 10,000 to 100,000.

6. The use according to claim 5, wherein one or both of the alkyl groups is methyl.

7. The use according to any preceding claim, wherein the cationic polyelectrolyte is poly(dially dimethyl ammonium chloride).

8. The use according to any one of claims 1 to 4, wherein the cationic polyelectrolyte is the product of copolymerising epichlorohydrin and an aliphatic secondary amine, which product has the formula 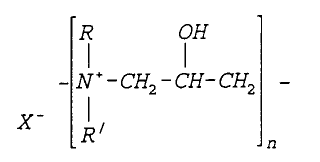 in which R and R', which may be the same or different, are each hydrogen or lower alkyl and X is Cl^{-,} Br^{-,} I^{-,} HSO₄^{-,} CH₃SO₄⁻ or NO₂⁻.

9. The use according to any preceding claim, wherein the clay mineral is of the Kandite group.

10. The use according to any one of claims 1 to 8, wherein the clay mineral is of the smectite group.

11. The use according to any preceding claim, wherein the clay mineral has a particle size distribution such that the mean particle diameter is not greater than 1 micrometer.

12. The use according to any preceding claim, wherein the clay mineral has a specific surface area of at least 12m².g⁻¹.

13. The use according to claim 1 or any one of claims 9 to 12, wherein the inorganic gel is a magnesium silicate gel.

14. A process for controlling the deposition of pitch in a paper-making process, wherein there is incorporated into the paper-making composition a coated inorganic particulate material which comprises a clay mineral coated with an inorganic gel which adheres to the clay and which renders the surface of the particles of clay hydrophobic.

15. A process according to claim 14, wherein the inorganic gel is a magnesium silicate gel.

16. A process according to claim 14 or 15, wherein the coated clay mineral is added to a paper mill thin stock in a substantially dry state to form the paper making composition.

17. A process according to claim 14, 15 or 16, wherein the amount of coated clay mineral added to the paper-making composition is in the range of from 0.5% to 25% by weight based on the dry weight of wood fibres in the paper mill thin stock.

18. A process according to any one of claims 14 to 17, wherein the clay mineral is of the Kandite group.

19. A process according to any one of claims 14 to 17, wherein the clay mineral is of the smectite group.

20. A process according to any one of claims 14 to 19, wherein the clay mineral has a particle size distribution such that the mean particle diameter is not greater than 1 micrometer.

21. A process according to any one of claims 14 to 20, wherein the clay mineral has a specific surface area of at least 12m².g⁻¹.

## Patentansprüche (Patentansprüche für folgende(n) Vertragsstaat(en): AT, BE, CH, DE, FR, IT, LI, LU, NL, SE)

1. Verwendung eines beschichteten anorganischen Teilchenmaterials, das ein Tonmineral enthält, beschichtet mit (a) einem kationischen Polyelektrolyten, der ein wasserlösliches substituiertes Polyolefin ist, das quartäre Ammoniumgruppen enthält, wobei der kationische Polyelektrolyt in einer Menge vorhanden ist von 0.01 bis 1.5 Gew.%, bezogen auf das Trockengewicht des Tonminerals, oder mit (b) einem anorganischen Gel, das an den Ton haftet und die Oberfläche der Tonteilchen hydrophob macht, als Mittel zur Kontrolle der Pechablagerung bei der Herstellung von Papier.

2. Verwendung nach Anspruch 1, wobei der kationische Polyelektrolyt quartäre Ammoniumgruppen in der linearen Polymerkette oder in den Verzweigungen der Polymerkette enthält.

3. Verwendung nach den Ansprüchen 1 oder 2, wobei das mittlere Molekulargewicht des kationischen Polyelektrolyten im Bereich zwischen 1500 und 500 000 liegt.

4. Verwendung nach einem der vorstehenden Ansprüche, wobei der kationische Polyelektrolyt ein Poly(diallyldi(H- oder niederes C₁₋₄-Alkyl)ammoniumsalz) ist mit einem mittleren Molekulargewicht im Bereich zwischen 10 000 und 100 000.

5. Verwendung nach Anspruch 4, wobei eine oder beide Alkylgruppen Methyl sind.

6. Verwendung nach einem der vorstehenden Ansprüche, wobei der kationische Polyelektrolyt Poly(diallyl-dimethyl-ammoniumchlorid) ist.

7. Verwendung nach einem der Ansprüche 1 bis 3, wobei der kationische Polyelektrolyt das Copolymerisationsprodukt aus Epichlorhydrin und einem aliphatischen sekundären Amin ist mit der Formel 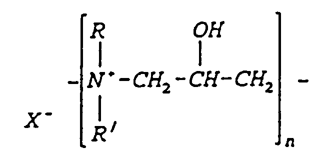 worin R und R' gleich oder verschieden sein können und Wasserstoff oder ein niederes Alkyl sind, und X Cl⁻, Br⁻, I⁻, HSO₄⁻, CH₃SO₄⁻ oder NO₂⁻ ist.

8. Verwendung nach einem der vorstehenden Ansprüche, wobei das Tonmineral aus der Kandit-Gruppe ist.

9. Verwendung nach einem der Ansprüche 1 bis 7, wobei das Tonmineral aus der Smektit-Gruppe ist.

10. Verwendung nach einem der vorstehenden Ansprüche, wobei das Tonmineral eine Teilchengrößenverteilung hat mit einem mittleren Teilchendurchmesser nicht größer als 1 Mikrometer.

11. Verwendung nach einem der vorstehenden Ansprüche, wobei das Tonmineral eine spezifische Oberfläche von mindestens 12 m²g⁻¹ hat.

12. Verwendung nach Anspruch 1 oder einem der Ansprüche 8 bis 11, wobei das anorganische Gel ein Magnesiumsilicatgel ist.

13. Verfahren zur Kontrolle der Pechablagerung bei der Papierherstellung, wobei in die Papierrohstoffzusammensetzung ein beschichtetes anorganisches Teilchenmaterial eingemischt wird, das ein Tonmineral enthält, beschichtet mit einem anorganischen Gel, das an den Ton haftet und die Oberfläche der Tonteilchen hydrophob macht.

14. Verfahren nach Anspruch 13, wobei das anorganische Gel ein Magnesiumsilicatgel ist.

15. Verfahren nach Anspruch 13 oder 14, wobei das beschichtete Tonmineral dem Papiermühlen-Dünnstoff in einem im wesentlichen trockenen Zustand zugesetzt wird und die Papierzusammensetzung gebildet wird.

16. Verfahren nach den Ansprüchen 13, 14 oder 15, wobei die Menge des beschichteten Tonminerals, die der Papierzusammensetzung zugesetzt wird im Bereich zwischen 0.5 und 25 Gew.% liegt, bezogen auf das Trockengewicht der Holzfasern in den Papierrohstoffen.

17. Verfahren nach einem der Ansprüche 13 bis 16, wobei das Tonmineral aus der Kandit-Gruppe ist.

18. Verfahren nach einem der Ansprüche 13 bis 16, wobei das Tonmineral aus der Smektit-Gruppe ist.

19. Verfahren nach einem der Ansprüche 13 bis 18, wobei das Tonmineral eine Teilchengrößenverteilung hat mit einem mittleren Teilchendurchmesser nicht größer als 1 Mikrometer.

20. Verfahren nach einem der Ansprüche 13 bis 19, wobei das Tonmineral eine spezifische Oberfläche von mindestens 12 m²g⁻¹ hat.

## Patentansprüche (Patentansprüche für folgende(n) Vertragsstaat(en): ES, GR)

1. Verwendung eines beschichteten anorganischen Teilchenmaterials, das ein Tonmineral enthält, beschichtet mit (a) einem kationischen Polyelektrolyten, der ein wasserlösliches substituiertes Polyolefin ist, das quartäre Ammoniumgruppen enthält, oder mit (b) einem anorganischen Gel, das an den Ton haftet und die Oberfläche der Tonteilchen hydrophob macht, als Mittel zur Kontrolle der Pechablagerung bei der Herstellung von Papier.

2. Verwendung nach Anspruch 1, wobei der kationische Polyelektrolyt quartäre Ammoniumgruppen in der linearen Polymerkette oder in den Verzweigungen der Polymerkette enthält.

3. Verwendung nach den Ansprüchen 1 oder 2, wobei der kationische Polyelektrolyt in einer Menge verwendet wird von 0.01 bis 1.5 Gew.%, bezogen auf das Trockengewicht des Tonminerals.

4. Verwendung nach den Ansprüchen 1, 2 oder 3, wobei das mittlere Molekulargewicht des kationischen Polyelektrolyten im Bereich zwischen 1500 und 500 000 liegt.

5. Verwendung nach einem der vorstehenden Ansprüche, wobei der kationische Polyelektrolyt ein Poly(diallyldi(H- oder niederes C₁₋₄-Alkyl)ammoniumsalz) ist mit einem mittleren Molekulargewicht im Bereich zwischen 10 000 und 100 000.

6. Verwendung nach Anspruch 5, wobei eine oder beide Alkylgruppen Methyl sind.

7. Verwendung nach einem der vorstehenden Ansprüche, wobei der kationische Polyelektrolyt Poly(diallyl-dimethyl-ammoniumchlorid) ist.

8. Verwendung nach einem der Ansprüche 1 bis 4, wobei der kationische Polyelektrolyt das Copolymerisationsprodukt aus Epichlorhydrin und einem aliphatischen sekundären Amin ist mit der Formel 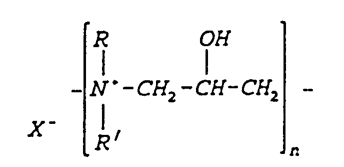 worin R und R' gleich oder verschieden sein können und Wasserstoff oder ein niederes Alkyl sind, und X Cl⁻, Br⁻, I⁻, HSO₄⁻, CH₃SO₄⁻ oder NO₂⁻ ist.

9. Verwendung nach einem der vorstehenden Ansprüche, wobei das Tonmineral aus der Kandit-Gruppe ist.

10. Verwendung nach einem der Ansprüche 1 bis 8, wobei das Tonmineral aus der Smektit-Gruppe ist.

11. Verwendung nach einem der vorstehenden Ansprüche, wobei das Tonmineral eine Teilchengrößenverteilung hat mit einem mittleren Teilchendurchmesser nicht größer als 1 Mikrometer.

12. Verwendung nach einem der vorstehenden Ansprüche, wobei das Tonmineral eine spezifische Oberfläche von mindestens 12 m²g⁻¹ hat.

13. Verwendung nach Anspruch 1 oder einem der Ansprüche 9 bis 13, wobei das anorganische Gel ein Magnesiumsilicatgel ist.

14. Verfahren zur Kontrolle der Pechablagerung bei der Papierherstellung, wobei in die Papierrohstoffzusammensetzung ein beschichtetes anorganisches Teilchenmaterial eingemischt wird, das ein Tonmineral enthält, beschichtet mit einem anorganischen Gel, das an den Ton haftet und die Oberfläche der Tonteilchen hydrophob macht.

15. Verfahren nach Anspruch 14, wobei das anorganische Gel ein Magnesiumsilicatgel ist.

16. Verfahren nach Anspruch 14 oder 15, wobei das beschichtete Tonmineral dem Papiermühlen-Dünnstoff in einem im wesentlichen trockenen Zustand zugesetzt wird und die Papierzusammensetzung gebildet wird.

17. Verfahren nach den Ansprüchen 14, 15 oder 16, wobei die Menge des beschichteten Tonminerals, daß der Papierzusammensetzung zugesetzt wird im Bereich zwischen 0.5 und 25 Gew.% liegt, basierend auf dem Trockengewicht der Holzfasern in den Papierrohstoffen.

18. Verfahren nach einem der Ansprüche 14 bis 17, wobei das Tonmineral aus der Kandit-Gruppe ist.

19. Verfahren nach einem der Ansprüche 14 bis 17, wobei das Tonmineral aus der Smektit-Gruppe ist.

20. Verfahren nach einem der Ansprüche 14 bis 19, wobei das Tonmineral eine Teilchengrößenverteilung hat mit einem mittleren Teilchendurchmesser nicht größer als 1 Mikrometer.

21. Verfahren nach einem der Ansprüche 14 bis 20, wobei das Tonmineral eine spezifische Oberfläche von mindestens 12 m²g⁻¹ hat.

## Revendications (Revendications pour l'(les) Etat(s) contractant(s) suivant(s): AT, BE, CH, DE, FR, IT, LI, LU, NL, SE)

1. Utilisation, en tant qu'agent destiné à contrôler le dépôt de poix au cours d'un processus de fabrication de papier, d'un matériau particulaire inorganique revêtu qui comprend un minéral argileux revêtu avec (a) un polyélectrolyte cationique qui est une polyoléfine substituée soluble dans l'eau contenant des groupes ammonium quaternaire, ledit polyélectrolyte cationique étant présent en une quantité allant de 0,01 à 1,5 % en poids sur la base du poids du minéral argileux sec ou avec (b) un gel inorganique qui adhère à l'argile et rend hydrophobe la surface des particules d'argile.

2. Utilisation selon la revendication 1, dans laquelle le polyélectrolyte cationique a des groupes ammonium quaternaire dans la chaîne polymère linéaire ou dans les chaînes latérales de la chaîne polymère.

3. Utilisation selon la revendication 1 ou 2, dans laquelle la masse moléculaire moyenne en nombre du polyélectrolyte cationique est comprise entre 1500 et 500 000.

4. Utilisation selon l'une quelconque des revendications précédentes, dans laquelle le polyélectrolyte cationique est un poly(sel de diallyle di (hydrogène ou alkyle inférieur en C₁-C₄) ammonium) ayant une masse moléculaire moyenne en nombre dans la gamme de 10 000 à 100 000.

5. Utilisation selon la revendication 4, dans laquelle un ou les deux groupes alkyle sont le groupe méthyle.

6. Utilisation selon l'une quelconque des revendications précédentes, dans laquelle le polyélectrolyte cationique est un poly(chlorure de diallyldiméthylammonium).

7. Utilisation selon l'une quelconque des revendications 1 à 3, dans laquelle le polyélectrolyte cationique est le produit de la copolymérisation d'épichlorhydrine et d'une amine secondaire aliphatique, ce produit ayant la formule 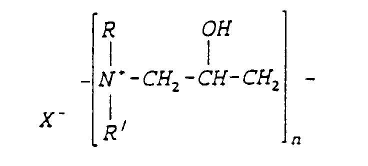 dans laquelle R et R', qui peuvent être identiques ou différents, sont chacun un atome d'hydrogène ou un groupe alkyle inférieur, et X est Cl⁻, Br⁻, I⁻, HSO₄⁻, CH₃SO₄⁻ ou NO₂⁻.

8. Utilisation selon l'une quelconque des revendications précédentes, dans laquelle le minéral argileux appartient au groupe des kandites.

9. Utilisation selon l'une quelconque des revendications 1 à 7, dans lequel le minéral argileux appartient au groupe des smectites.

10. Utilisation selon l'une quelconque des revendications précédentes, dans laquelle le minéral argileux a une distribution granulométrique telle que le diamètre moyen des particules ne dépasse pas 1 micromètre.

11. Utilisation selon l'une quelconque des revendications précédentes, dans laquelle le minéral argileux a une surface spécifique d'au moins 12 m².g⁻¹.

12. Utilisation selon la revendication 1 ou selon l'une quelconque des revendications 8 à 11, dans laquelle le gel inorganique est un gel silicate de magnésium.

13. Procédé pour contrôler le dépôt de poix au cours d'un processus de fabrication de papier, dans lequel on incorpore dans la composition de pâte à papier un matériau particulaire inorganique revêtu qui comprend un minéral argileux revêtu avec un gel inorganique qui adhère à l'argile et rend hydrophobe la surface des particules d'argile.

14. Procédé selon la revendication 13, dans lequel le gel inorganique est un gel silicate de magnésium.

15. Procédé selon la revendication 13 ou 14, dans lequel le minéral argileux revêtu est ajouté à une pâte maigre de machine à papier dans un état pratiquement sec pour former la composition de pâte à papier.

16. Procédé selon la revendication 13, 14 ou 15, dans lequel la quantité de minéral argileux revêtu ajouté à la composition de pâte à papier est comprise entre 0,5 % et 25 % en poids, sur la base du poids sec de fibres de bois dans la pâte maigre pour machine à papier.

17. Procédé selon l'une quelconque des revendications 13 à 16, dans lequel le minéral argileux appartient au groupe des kandites.

18. Procédé selon l'une quelconque des revendications 13 à 16, dans lequel le minéral argileux appartient au groupe des smectites.

19. Procédé selon l'une quelconque des revendications 13 à 18, dans lequel le minéral argileux a une distribution granulométrique telle que le diamètre moyen des particules ne dépasse pas 1 micromètre.

20. Procédé selon l'une quelconque des revendications 13 à 19, dans lequel le minéral argileux a une surface spécifique d'au moins 12 m².g⁻¹.

## Revendications (Revendications pour l'(les) Etat(s) contractant(s) suivant(s): ES, GR)

1. Utilisation, en tant qu'agent destiné à contrôler le dépôt de poix au cours d'un processus de fabrication de papier, d'un matériau particulaire inorganique revêtu qui comprend un minéral argileux revêtu avec (a) un polyélectrolyte cationique qui est une polyoléfine substituée soluble dans l'eau contenant des groupes ammonium quaternaire, ou avec (b) un gel inorganique qui adhère à l'argile et rend hydrophobe la surface des particules d'argile.

2. Utilisation selon la revendication 1, dans laquelle le polyélectrolyte cationique a des groupes ammonium quaternaire dans la chaîne polymère linéaire ou dans les chaînes latérales de la chaîne polymère.

3. Utilisation selon la revendication 1 ou 2, dans laquelle le polyélectrolyte cationique est utilisé en une quantité allant de 0,01 à 1,5 % en poids sur la base du poids du minéral argileux sec

4. Utilisation selon la revendication 1, 2 ou 3, dans laquelle la masse moléculaire moyenne en nombre du polyélectrolyte cationique est comprise entre 1500 et 500 000.

5. Utilisation selon l'une quelconque des revendications précédentes, dans laquelle le polyélectrolyte cationique est un poly(sel de diallyle di (hydrogène ou alkyle inférieur en C₁-C₄) ammonium) ayant une masse moléculaire moyenne en nombre dans la gamme de 10 000 à 100 000.

6. Utilisation selon la revendication 5, dans laquelle un ou les deux groupes alkyle sont le groupe méthyle.

7. Utilisation selon l'une quelconque des revendications précédentes, dans laquelle le polyélectrolyte cationique est un poly(chlorure de diallyldiméthylammonium).

8. Utilisation selon l'une quelconque des revendications 1 à 4, dans laquelle le polyélectrolyte cationique est le produit de la copolymérisation d'épichlorhydrine et d'une amine secondaire aliphatique, ce produit ayant la formule 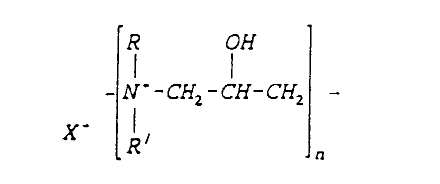 dans laquelle R et R', qui peuvent être identiques ou différents, sont chacun un atome d'hydrogène ou un groupe alkyle inférieur, et X est Cl⁻, Br⁻, I⁻, HSO₄⁻, CH₃SO₄⁻ ou NO₂⁻.

9. Utilisation selon l'une quelconque des revendications précédentes, dans laquelle le minéral argileux appartient au groupe des kandites.

10. Utilisation selon l'une quelconque des revendications 1 à 8, dans lequel le minéral argileux appartient au groupe des smectites.

11. Utilisation selon l'une quelconque des revendications précédentes, dans laquelle le minéral argileux a une distribution granulométrique telle que le diamètre moyen des particules ne dépasse pas 1 micromètre.

12. Utilisation selon l'une quelconque des revendications précédentes, dans laquelle le minéral argileux a une surface spécifique d'au moins 12 m².g⁻¹.

13. Utilisation selon la revendication 1 ou selon l'une quelconque des revendications 9 à 12, dans laquelle le gel inorganique est un gel silicate de magnésium.

14. Procédé pour contrôler le dépôt de poix au cours d'un processus de fabrication de papier, dans lequel on incorpore dans la composition de pâte à papier un matériau particulaire inorganique revêtu qui comprend un minéral argileux revêtu avec un gel inorganique qui adhère à l'argile et rend hydrophobe la surface des particules d'argile.

15. Procédé selon la revendication 14, dans lequel le gel inorganique est un gel silicate de magnésium.

16. Procédé selon la revendication 14 ou 15, dans lequel le minéral argileux revêtu est ajouté à une pâte maigre de machine à papier dans un état pratiquement sec pour former une composition de pâte à papier.

17. Procédé selon la revendication 14, 15 ou 16, dans lequel la quantité de minéral argileux revêtu ajouté à la composition de pâte à papier est comprise entre 0,5 % et 25 % en poids, sur la base du poids sec de fibres de bois dans la pâte maigre pour machine à papier.

18. Procédé selon l'une quelconque des revendications 14 à 17, dans lequel le minéral argileux appartient au groupe des kandites.

19. Procédé selon l'une quelconque des revendications 14 à 17, dans lequel le minéral argileux appartient au groupe des smectites.

20. Procédé selon l'une quelconque des revendications 14 à 19, dans lequel le minéral argileux a une distribution granulométrique telle que le diamètre moyen des particules ne dépasse pas 1 micromètre.

21. Procédé selon l'une quelconque des revendications 14 à 20, dans lequel le minéral argileux a une surface spécifique d'au moins 12 m².g⁻¹.
